# EUROPÄISCHE PATENTSCHRIFT

(11) **EP 1 479 653 B1**
(45) Veröffentlichungstag und Bekanntmachung des Hinweises auf die Patenterteilung: **19.12.2007**
(21) Anmeldenummer: 04008949.2
(22) Anmeldetag: 14.04.2004
(51) Int. Cl.: C01G 33/00, C01G 35/00, C01G 25/00, C01G 23/00, C01G 29/00

(54) **Verfahren zur Herstellung von Mischoxiden mit mittleren Durchmessern kleiner als 10 Nanometer**
Process for preparing mixed oxides with average diameters lower than 10 nanometer
Procédé de préparation des oxydes mixtes avec un diamètre moyen inférieur à 10 nanomètres

(30) Priorität: 23.05.2003 DE 10323816
(43) Veröffentlichungstag der Anmeldung: 24.11.2004
(73) Patentinhaber: BASF Aktiengesellschaft, 67056 Ludwigshafen (DE)
(72) Erfinder: Sterzel, Hans-Josef, Dr., 67125 Dannstadt-Schauernheim (DE)

(56) Entgegenhaltungen:
- EP-A- 1 362 830
- WO-A-02/42201
- US-A- 5 017 534
- US-A- 5 445 806

## Beschreibung

Die vorliegende Erfindung betrifft ein Verfahren zur Herstellung von Mischoxiden durch Umsetzung von Alkoholaten von Titan, Zirkon, Niob bzw. Tantal mit Metallhydroxiden, Metallcarboxylaten, Metallhydroxicarbonaten, Metallcarbonaten anderer Elemente des PSE in Glykolether bei erhöhter Temperatur.

Aus Materials Physics and Mechanics (2002), 4(2), Seiten 107 bis 110 ist die Herstellung von Lanthan-Titanaten ausgehend von Lanthannitrat und Titanalkoxiden bekannt.

Aus der GB-A-2,193,204 ist die Herstellung von amorphen Lanthan-Blei-Titan-Zirkonoxiden unter Einsatz von Bleialkoxiden bekannt, die bei erhöhten Temperaturen kristallisiert werden.

Aus der US-A-3923675 ist die Herstellung von Lanthan-Blei-Titan-Zirkonoxiden durch Hydrolyse der Alkoxide bekannt. Dieses Verfahren führt zu Partikeln von 7,5 bis30 nm.

Aus Silicate Industriels (1984), 49(10), Seiten 211 bis 216 ist die Herstellung von Lanthan-Blei-Titan-Zirkonoxiden aus Blei- und Lanthanacetat und Zirkon- und Titanalkoxid durch basische Hydrolyse und anschließendes Calcinieren bekannt.

Nachteilig an diesen Verfahren sind die Größe der erhaltenen Körner bzw. der verbleibende Kohlenstoffgehalt.

Der vorliegenden Erfindung lag daher die Aufgabe zugrunde, den zuvor genannten Nachteilen abzuhelfen.

Demgemäß wurde ein neues und verbessertes Verfahren zur Herstellung von Mischoxiden gefunden, welches dadurch gekennzeichnet ist, dass man Alkoholate der Elemente Titan, Zirkon, Niob, Tantal oder deren Gemische mit Metallhydroxiden, Metallcarboxylaten, Metallhydroxicarbonaten, Metallcarbonaten oder deren Gemischen von Gemischen der Elemente Lithium, Natrium, Kalium, Magnesium, Calcium, Strontium, Barium, Zink, Cadmium, Aluminium, Gallium, Yttrium, Lathan, Praseodym, Neodym, Samarium, Dysprosium, Europium, Blei oder Wismut in einem Glykolether oder Gemischen von Glykolethern bei einer Temperatur von 50 bis 200°C umsetzt.

Das erfindungsgemäße Verfahren lässt sich wie folgt durchführen:

Man kann Alkoholate der Elemente Titan, Zirkon, Niob, Tantal oder deren Gemische in einem Glykolether oder Gemischen von Glykolethern vorlegen und bei einer Temperatur von 50 bis 200°C, bevorzugt 60 bis 180°C, besonders bevorzugt 70 bis 160°C, insbesondere 75 bis 150°C und einem Druck von 0,1 bis 3 bar, bevorzugt 0,5 bis 2 bar, besonders bevorzugt bei Atmosphärendruck (Normaldruck) und gegebenenfalls Inertgasatmosphäre (Stickstoff oder Argon) mit Metallhydroxiden, Metallcarboxylaten, Metallhydroxicarbonaten, Metallcarbonaten oder deren Gemischen von Gemischen der Elemente Lithium, Natrium, Kalium, Magnesium, Calcium, Strontium, Barium, Zink, Cadmium, Aluminium, Gallium, Yttrium, Lathan, Praseodym, Neodym, Samarium, Dysprosium, Europium, Blei oder Wismut und gegebenenfalls einer organischen oder anorganischen Säure, bevorzugt einer organischen Säure, besonders bevorzugt einer Carbonsäure wie Ameisensäure, Essigsäure, Propionsäure, insbesondere Essigsäure umsetzen.

Die Konzentration der alkoholischen Alkoholat-Lösung kann in weiten Grenzen variiert werden. Bevorzugt liegt die Konzentration bei 50 bis 800 g/Liter, besonders bevorzugt bei 100 bis 600 g/Liter, besonders bevorzugt bei 200 bis 400 g/Liter.

Als Alkoholate eignen sich beispielsweise C₁- bis C₈-Alkoholate, bevorzugt C₁- bis C₅-Alkoholate wie Methanolate, Ethanolate, n-Propanolate, iso-Propanolate, n-Butanolate, iso-Butanolate, sec.-Butanolate, tert.-Butanolate, n-Pentanolate und iso-Pentanolate, besonders bevorzugt C₁- bis C₄-Alkoholate wie Methanolate, Ethanolate, n-Propanolate, iso-Propanolate, n-Butanolate, iso-Butanolate, sec.-Butanolate und tert.-Butanolate, insbesondere n-Propanolate, iso-Propanolate, n-Butanolate und iso-Butanolate oder deren Gemische.

Als Glykolether eignen sich alle bekannten Glykolether wie beispielsweise Ethylenglykol-mono-methylether, Ethylenglykol-mono-ethylether, Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mono-methylether, Diethylenglykol-mono-ethylether, Diethylenglykol-mono-n-propylether, Diethylenglykol-mono-iso-propylether, Diethylenglykol-mono-n-butylether, Diethylenglykol-mono-iso-butylether, Diethylenglykol-mono-sec.-butylether, Diethylenglykol-tert.-butylether, bevorzugt Ethylenglykol-mono-ethylether, Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mono-ethylether, Diethylen glykol-mono-n-butylether, Diethylenglykol-mono-iso-butylether, Diethylenglykol-mono-sec.-butylether, Diethylenglykol-tert.-butylether, bevorzugt Ethylenglykol-mono-ethylether, Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mono-ethylether, Diethylenglykol-mono-n-propylether, Diethylenglykol-mono-iso-propylether, Diethylenglykol-mono-n-butylether, Diethylenglykol-mono-iso-butylether, Diethylenglykol-mono-sec.-butylether und Diethylenglykol-tert.-butylether, besonders bevorzugt Ethylenglykol-mono-n-propylether, Ethylenglykol-mono-iso-propyletherEthylenglykol-mono-n-butylether, Ethylenglykol-mono-iso-butylether, Ethylenglykol-mono-sec.-butylether, Ethylenglykol-tert.-butylether, Diethylenglykol-mono-n-propylether, Diethylenglykol-mono-iso-propylether, Diethylenglykol-mono-n-butylether, Diethylenglykol-mono-iso-butylether, Diethylenglykol-mono-sec.-butylether und Diethylenglykol-tert.-butylether, insbesondere Ethylenglykol-mono-iso-propylether, Ethylenglykol-mono-iso-butylether, Ethylenglykol-tert.-butylether, Diethylenglykol-mono-iso-propylether, Diethylenglykol-mono-iso-butylether und Diethylenglykol-tert.-butylether.

Eine vorteilhafte Ausführungsform besteht darin, dass kein zusätzliches Wasser außer dem Wasser aus den eingesetzten Hydraten in die Umsetzung eingetragen wird.

Eine bevorzugte Ausführungsform besteht darin, dass einen Teil der Hydrate durch wasserfreie Komponenten zu ersetzen.

Gegebenenfalls können Dotierelemente wie Mg, Ca, Zn, Zr, V, Nb, Ta, Bi, Cr, Mo, W, Mn, Fe, Co, Ni, Pb, Ce oder deren Gemische, bevorzugt Mg, Ca, Cr, Fe, Co, Ni, Pb oder deren Gemische, beispielsweise in Form ihrer Hydroxide, Oxide, Carbonate, Carboxylate oder Nitrate eingebracht werden.

Die erfindungsgemäß hergestellten Mischoxide haben einen mittleren Teilchendurchmesser von kleiner als 10 nm, bevorzugt 0,5 bis 9,9 nm, besonders bevorzugt 0,6 bis 9 nm, insbesondere 1 bis 8 nm.

Die Mischoxide eignen sich als Dielektrika oder Ferroelektrika und haben relative Dielektrizitätskonstanten bis 5000. Sie eignen sich als Dielektrika oder Ferroelektrika in Kondensatoren, insbesondere in keramischen Kondensatoren.

Es ist möglich, kommerzielle Metallfolien wie Nickelfolien mit den erfindungsgemäßen Dispersionen in Schichtdicken unterhalb 0,5 mm zu beschichten, den Glykolether zu verdampfen und bevorzugt unter Sauerstoffausschluss eine entsprechend dünne Mischoxidschicht auf der Metallfolie zu erzeugen und damit einen Wickelkondensator herzustellen.

### Beispiele

### Beispiel 1

Unter Stickstoffatmosphäre wurden 110 g wasserfreies n-Butylglykol und 22,4 g (0,066 Mol) Titantetra-n-butanolat, 34,6 g (0,133 Mol) Wismuthydroxid und 20,8 g (0,066 Mol) Bariumhydroxid-Octahydrat unter Rühren zugegeben und 48 h bei 120°C umgesetzt. Man erhielt eine Suspension von Ba2Bi4Ti5O8-Teilchen mit einem mittleren Teilchendurchmesser von 3 bis 6 nm.

### Beispiel 2

Unter Stickstoffatmosphäre wurden 110 g wasserfreies n-Butylglykol und 22,4 g (0,066 Mol) Titantetra-n-butanolat, 25,3 g (0,066 Mol) Zirkontetra-n-butanolat, 25,3 g (0,133 Mol) Lanthanhydroxid und 50,4 g (0,133 Mol) Bleiacetat-trihydrat unter Rühren zugegeben und 116 h bei 140°C umgesetzt. Man erhielt eine Suspension von PbLaZr0,5Ti0,503-Teilchen mit einem mittleren Teilchendurchmesser von 2 bis 5 nm.

### Beispiel 3

Unter Stickstoffatmosphäre wurden 110 g wasserfreies n-Butylglykol und 113,3 g (0,333 Mol) Titantetra-n-butanolat, 28,4 g (0,075 Mol) Bleiacetat-trihydrat, 14,2 g (0,075 Mol) Lanthanhydroxid und 34,1 g (0,533 Mol) Essigsäure (100 %) unter Rühren zugegeben und 92 h bei 130°C umgesetzt. Man erhielt eine Suspension von Pb0,5La0,5Ti1,25O3,75-Teilchen mit einem mittleren Teilchendurchmesser von 3 bis 7 nm.

## Patentansprüche

1. Verfahren zur Herstellung von Mischoxiden, **dadurch gekennzeichnet, dass** man Alkoholate der Elemente Titan, Zirkon, Niob, Tantal oder deren Gemische mit Metallhydroxiden, Metallcarboxylaten, Metallhydroxicarbonaten, Metallcarbonaten oder deren Gemischen von Gemischen der Elemente Lithium, Natrium, Kalium, Magnesium, Calcium, Strontium, Barium, Zink, Cadmium, Aluminium, Gallium, Yttrium, Lathan, Praseodym, Neodym, Samarium, Dysprosium, Europium, Blei oder Wismut in einem Glykolether oder Gemischen von Glykolethern bei einer Temperatur von 50 bis 200°C umsetzt.

2. Verfahren zur Herstellung von Mischoxiden nach Anspruch 1, **dadurch gekennzeichnet, dass** der mittlere Durchmesser der Mischoxid-Teilchen kleiner als 10 nm ist.

3. Mischoxide hergestellt nach einem der Ansprüche 1 oder 2, **dadurch gekennzeichnet, dass** die Mischoxid-Teilchen einen mittleren Durchmesser kleiner als 10 nm aufweisen.

4. Verwendung der Mischoxide nach einem der Ansprüche 1, 2 oder 3 als Dielektrika oder Ferroelektrika.

5. Verwendung der Mischoxide nach einem der Ansprüche 1, 2 oder 3 als Dielektrika oder Ferroelektrika in Kondensatoren.

## Claims

1. A process for preparing mixed oxides, which comprises reacting alkoxides of the elements titanium, zirconium, niobium, tantalum or mixtures thereof with metal hydroxides, metal carboxylates, metal hydroxycarbonates, metal carbonates or mixtures thereof of mixtures of the elements lithium, sodium, potassium, magnesium, calcium, strontium, barium, zinc, cadmium, aluminum, gallium, yttrium, lanthanum, praseodymium, neodymium, samarium, dysprosium, europium, lead or bismuth, in a glycol ether or in mixtures of glycol ethers at from 50 to 200°C.

2. The process for preparing mixed oxides according to claim 1, wherein the mean diameter of the mixed oxide particles is less than 10 nm.

3. A mixed oxide prepared as claimed in claim 1 or 2, wherein the mixed oxide particles have a mean diameter of less than 10 nm.

4. The use of the mixed oxides prepared as claimed in claim 1 or 2 or as claimed in claim 3 as dielectric or ferroelectric.

5. The use of the mixed oxides prepared as claimed in claim 1 or 2 or as claimed in claim 3 as dielectric or ferroelectric in a capacitor.

## Revendications

1. Procédé de fabrication d'oxydes mixtes, **caractérisé en ce que** l'on fait réagir des alcoolates d'éléments de type titane, zirconium, niobium, tantale ou leurs mélanges, avec des hydroxydes de métal, des carboxylates de métal, des hydroxycarbonates de métal, des carbonates de métal ou leurs mélanges, provenant de mélanges d'éléments, tels que le lithium, le sodium, le potassium, le magnésium, le calcium, le strontium, le baryum, le zinc, le cadmium, l'aluminium, le gallium, l'yttrium, le lanthane, le praséodyme, le néodyme, le samarium, le dysprosium, l'europium, le plomb ou le bismuth, dans un éther de glycol ou dans des mélanges d'éthers de glycol à une température de 50 à 200 °C.

2. Procédé de fabrication d'oxydes mixtes selon la revendication 1, **caractérisé en ce que** le diamètre moyen des particules d'oxyde mixte est inférieur à 10 nm.

3. Oxydes mixtes fabriqués selon l'une quelconque des revendications 1 ou 2, **caractérisés en ce que** les particules d'oxyde mixte présentent un diamètre moyen inférieur à 10 nm.

4. Utilisation des oxydes mixtes selon l'une quelconque des revendications 1, 2 ou 3, comme diélectriques ou comme ferroélectriques.

5. Utilisation des oxydes mixtes selon l'une quelconque des revendications 1, 2 ou 3, comme diélectriques ou comme ferroélectriques dans des condensateurs.
